# EUROPEAN PATENT SPECIFICATION

(11) **EP 1 361 102 B1**
(45) Date of publication and mention of the grant of the patent: **05.05.2010**
(21) Application number: 03010242.0
(22) Date of filing: 07.05.2003
(51) Int. Cl.: F16H 57/02, F16D 21/06

(54) **Support for a coupling unit in a motor-vehicle transmission**
Lagerung für eine Kupplungseinheit in einem Getriebe eines Kraftfahrzeuges
Support pour une unité d'embrayage dans une transmission de vehicule

(30) Priority: 08.05.2002 IT TO20020382
(43) Date of publication of application: 12.11.2003
(60) Divisional application: 05112661.3
(73) Proprietor: C.R.F. Società Consortile per Azioni, 10043 Orbassano (Torino) (IT)
(72) Inventor: Caenazzo, Dario, 10060 Scalenghe (Torino) (IT); Mesiti, Domenico, 10040 Leini' (Torino) (IT); Pregnolato, Gianluigi, 10024 Moncalieri (Torino) (IT); Uberti, Maurizio, 10137 Torino (IT)
(74) Representative: Rondano, Davide

(56) References cited:
- DE-A- 3 037 990
- DE-A- 10 034 730
- DE-A1- 10 004 189
- DE-A1- 19 914 376
- FR-A- 2 714 136
- US-A- 3 185 274

## Description

The present invention relates to a motor-vehicle transmission of the type specified in the preamble to Claim 1.

European Patent Application EP-A-1 275 867 discloses a clutch unit for a motor-vehicle transmission having two coaxial input shafts, namely an inner input shaft and a hollow outer input shaft. The clutch unit comprises first and second normally-open dry clutches associated to the inner and outer input shafts of the transmission, respectively. The first clutch comprises a first disc connected for rotation with the inner input shaft, a first abutment member facing towards a crankshaft of the motor-vehicle and a first, axially movable pressure plate. The second clutch comprises a second disc connected for rotation with the outer input shaft, a second abutment member interposed between the two discs and a second, axially movable pressure plate. Both the abutment members are fixed to a clutch case which is in turn fixed to the crankshaft. In order to prevent the axial forces occurring during actuation of the clutches from being transmitted to the crankshaft, an axial bearing is provided which is interposed between the clutch case and the inner input shaft and is fixedly connected to this shaft.

A motor-vehicle transmission according to the preamble to Claim 1 is known from US-A-3 185 274. This document discloses in particular a transmission with a gearbox having two input shafts and with a coupling unit having two dry clutches sharing the same driving portion, i.e. the portion connected for rotation with the crankshaft. The driving portion of the coupling unit is supported for rotation on the outer input shaft of the gearbox by means of a radial ball bearing the inner race of which is not axially constrained on that shaft.

The object of the invention is to provide a motor-vehicle transmission which is arranged in a manner such that the clutch-actuating forces are not discharged onto the crankshaft and do not therefore represent a potential critical factor for the axial supports thereof.

Another object of the present invention is to provide a motor-vehicle transmission which can also operate in the presence of misalignments and eccentricities between the crankshaft and the gearbox input shaft or shafts.

A further object of the present invention is to provide a motor-vehicle transmission having a clutch unit that can filter out the torsional and axial oscillations of the crankshaft.

These objects are achieved in full by a motor-vehicle transmission having the characteristics defined in independent Claim 1. Further advantageous characteristics of the invention are defined in the dependent claims.

The main advantage of a motor-vehicle transmission according to the present invention is that the crankshaft, and consequently also its axial supports (usually friction bearings), are not loaded axially during the actuation (disengagement/engagement) of the clutches. It is thus possible to increase the axial loads required to actuate the clutches without thereby increasing the stresses on the axial bearings of the crankshaft. At the same time it is possible to reduce the lever arms of the disc springs which bring about the disengagement/engagement of the clutches, with a consequent reduction in the actuation travel required.

The characteristics and the advantages of the invention will become clearer from the following detailed description which is given purely by way of non-limiting example with reference to the appended drawings, in which:
Figure 1 is a longitudinal section through a first embodiment according to the present invention of a motor-vehicle transmission provided with a gearbox with two coaxial input shafts and two clutches,
Figure 2 is a longitudinal section through a second embodiment according to the present invention of a motor-vehicle transmission of the type shown in Figure 1,
Figure 3 is a longitudinal section through a third embodiment according to the present invention of a motor-vehicle transmission provided with a gearbox with one input shaft and one clutch, and
Figure 4 is a longitudinal section through a fourth embodiment according to the present invention of a motor-vehicle transmission of the type shown in Figure 3.

In the description and the claims which follow, terms such as "longitudinal" or "axial", as well as "radial" or "transverse" are intended to refer to the mounted condition on a motor vehicle.

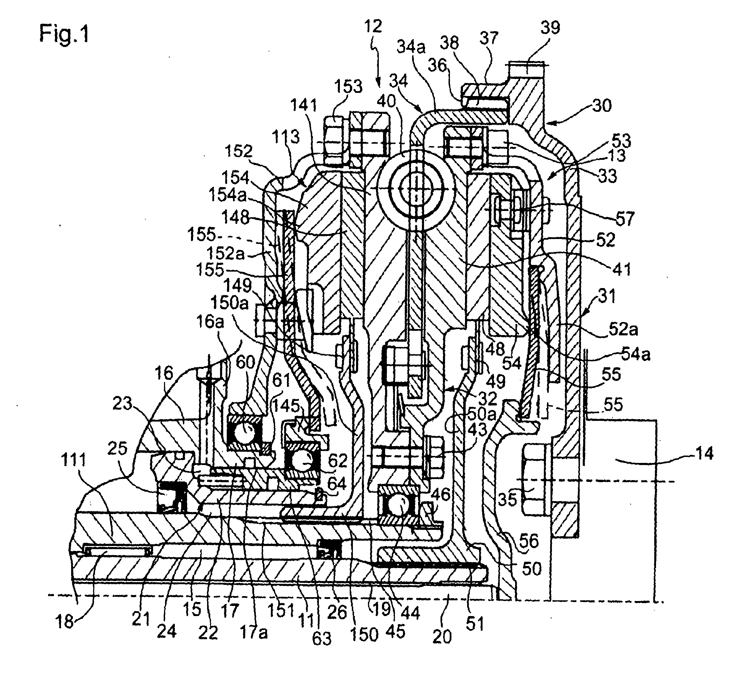

With reference to Figure 1, a motor-vehicle transmission, advantageously (but not necessarily) of the power-shift type, comprises:
- a gearbox, which is not shown since it is known (for example, from Italian patent application T02001A000286) with two coaxial input shafts, that is, an inner input shaft 11 and an outer input shaft 111, respectively, and
- a clutch unit 12 as a coupling unit with two clutches 13 and 113 of the normally-engaged, single-plate, dry type, for connecting a crankshaft 14 of the internal combustion engine, of which only the end portion facing towards the transmission is shown, for rotation with the gearbox input shafts 11 and 111, respectively.

The gearbox is enclosed by a support housing 16, shown partially in Figure 1 and having, at the end facing towards the clutch unit 12, a tubular extension 17 with a central axial hole 17a through which the two coaxial input shafts 11 and 111 extend. The outer shaft 111 has a tubular structure with a substantially cylindrical, central, coaxial cavity 15. The cavity 15 houses the inner shaft 11 which is supported for rotation by support elements of known type, including, for example, a needle bearing 18. The inner shaft 11 also has a tubular structure with a substantially cylindrical, central, coaxial cavity 19 in which a rod 20 for actuating the clutch 13 is slidable axially.

A sleeve 21 is interposed radially between the outer input shaft 111 and the cylindrical hole 17a formed in the extension 17 of the support housing 16. At the end facing towards the clutch unit 12, the sleeve 21 forms a cylindrical portion 22 which is coaxial with the two input shafts and which defines, with the cylindrical hole 17a, an outer annular space 23 and, with the shaft 111, an inner annular space 24.

Two oil-seal rings 25 and 26 are fitted between the sleeve 21 and the outer input shaft 111 and between the two input shafts 11 and 111, respectively, to prevent lubricating oil passing from the gearbox compartment, which operates in an oil bath, to the clutch unit 12 which, on the other hand, operates dry.

A two-mass flywheel, generally indicated 30 and comprising a first mass 31 and a second mass 32, is interposed axially between the clutch unit 12 and the crankshaft 14.

The first mass 31 of the flywheel 30 comprises a first element 33 and a second element 34 which are arranged side by side, the first facing towards the engine and the second towards the gearbox.

The first element 33 of the first mass 31 is formed as a disc with an axial section that is variously shaped but extends substantially radially. A plurality of holes are formed in a radially inner position of the first element 33 for the fixing of the element to the crankshaft 14 by means of screws 35 and, in a radially outer position, a tubular extension 37 provided with an internal ring gear 36 projects axially towards the second element 34. The first element 33 also has, on its outer periphery, a ring gear 39 for meshing with a pinion of the electric starter (not shown) for starting the internal combustion engine of the vehicle.

The second element 34 of the first mass 31 also is formed as a disc having a substantially L-shaped axial section with a cylindrical annular portion 34a which projects axially towards the first element 33. A ring gear 38 is formed on the outer periphery of the portion 34a and meshes permanently with the ring gear 36 of the first element 33 so as to connect the two elements 33 and 34 of the first mass 31 for rotation. The second element 34 is also connected to the second mass 32 through a torsional damper 40, such as for example flexible-coupling springs.

The second mass 32 of the flywheel 30 also comprises a first element 41 and a second element 141, both of which are disc-shaped and which are disposed on axially opposite sides of the second element 34 of the first mass 31 and are fixed together by means of screws 43. The second mass 32 is supported for rotation by a radial ball bearing 44 mounted on the outer gearbox input shaft 111. The outer race of the bearing 44 is clamped axially between a pair of shoulders provided by the two elements 41 and 141 of the second mass 32. The inner race of the bearing 44 is mounted in axial abutment on one side with a side of a splined portion 45 formed on the outer cylindrical surface of the shaft 111, and is clamped axially on the opposite side by means of a ring nut 46.

The first element 41 of the second mass 32 of the flywheel 30 is also arranged to act as an abutment member for the clutch 13 associated with the inner gearbox input shaft 11.

The clutch 13 is composed of a driven portion and of a driving portion which are fast for rotation with the input shaft 11 and with the crankshaft 14 (via the flywheel 30), respectively, and which can be coupled torsionally with each other to permit the transmission of torque between the shafts 11 and 14.

The driven portion of the clutch 13 comprises a plate 48 which is provided with rings made of friction material on both of its axial faces and which is fixed, by means of rivets 49, to a flange 50a of a hub 50 arranged so as to be slidable axially along a splined end portion 51 of the inner gearbox input shaft 11.

In addition to the above-described first element 41, the driving portion of the clutch 13 comprises a cover 52 fixed to the periphery of the first element 41 by means of screws 53 and having a substantially vertical wall 52a which extends radially inwards on the axially opposite side of the plate 48 to the first element 41. An axially movable clutch pressure plate 54 interposed between the plate 48 and the cover 52 is restrained for rotation with the latter by means of tangential tabs 57. The clutch pressure plate 54 is urged axially against the plate 48 by a disc spring 55 so that the plate 48 is kept clamped between the first element 41 and the pressure plate 54 and can therefore transmit torque with these two components as a result of the friction between the axial abutment surfaces.

The disc spring 55 is clamped axially between its two radially outer and radially inner end portions, respectively, by the vertical wall 52a of the cover 52 and by a disc-shaped engagement element 56 which can be moved axially by the actuating rod 20. When the spring is not deformed, that is, when no command is imparted to the clutch 13 by means of the rod 20, a radially intermediate portion of the spring 55 exerts a leftward axial pressure (as observed in Figure 1) against a projection 54a of the clutch pressure plate 54, thus keeping the clutch 13 engaged.

In order to disengage the clutch 13 it is necessary to move the actuating rod 20 towards the right along the cavity 19 of the inner input shaft 11 so as to urge the radially inner portion of the spring 55 by means of the engagement element 56. The spring 55 pivots on the cover 52 and thus tends to rotate about its radially outer edge until it achieves the deformed configuration shown in broken line in Figure 1. In this condition, the clutch pressure plate 54, which is no longer subject to the axial pressure of the spring 55, moves away from the plate 48 by virtue of the action of the tangential tabs 57, thus interrupting the transmission of torque between the driving portion and the driven portion of the clutch.

The structure of the clutch 113 associated with the outer gearbox input shaft 111 will now be described, again with reference to Figure 1, in which the components and parts of the clutch 113 which correspond in structure and/or function to those of the clutch 13 are indicated by the same reference numerals but increased by 100.

The clutch 113 is composed of a driven portion and of a driving portion which are fast for rotation with the outer input shaft 111 and with the crankshaft 14 (via the flywheel 30), respectively, and which can be coupled torsionally with each other to permit the transmission of torque between the shafts 111 and 14.

The driven portion of the clutch 113 comprises a plate 148 which is provided with rings made of friction material on both of its axial faces and which is fixed by means of rivets 149 to a flange 150a of a hub 150 arranged so as to be slidable axially along a splined portion 151 of the outer gearbox input shaft 111.

The driving portion of the clutch 113 comprises, substantially:
- an abutment member provided by the second element 141 of the second mass 32 of the flywheel 30,
- a cover 152 fixed by screws 153 to the periphery of the second element 141 and having a substantially vertical wall 152a which extends radially inwards on the axially opposite side of the plate 148 to the second element 141, separating the clutch unit 12 from the gearbox, and
- an axially movable clutch pressure plate 154 interposed between the plate 148 and the cover 152 and restrained for rotation with the latter by means of tangential tabs (not visible in Figure 1).

The cover 152 is supported for rotation by a radial ball bearing 60 fitted on the tubular extension 17 of the gearbox housing 16. The outer race of the bearing 60 is free axially, whereas the inner race is clamped by a snap ring 61 against a shoulder formed in the housing 16.

In rest conditions, that is, when the driver of the vehicle is not imparting any commands to the clutch, the plate 148 is kept clamped between the second element 141 and the clutch pressure plate 154 as a result of the axial pressure exerted by a disc spring 155 on the plate 154.

The disc spring 155 is restrained on the vertical wall 152a of the cover 152 and bears, with its two radially outer and radially inner end portions, respectively, against a projection 154a of the clutch pressure plate 154, and against an annular engagement element 145. The element 145 is supported for rotation by a radial ball bearing 62 mounted on an end of a plunger 63.

The plunger 63 is arranged so as to be slidable axially in the annular space 23 formed between the cylindrical portion 22 of the sleeve 21 and the tubular extension 17 of the gearbox support housing 16. The supply of oil under pressure to the annular space 23 from a duct formed in a vertical wall 16a of the gearbox housing 16 brings about rightward axial movement of the plunger 63 as far as a travel-limit position defined by a snap ring 64 fitted on the end of the sleeve 22 facing the engine. By means of the engagement element 145, the plunger 63 pulls along the radially inner end portion of the spring 155 which thus tends to pivot about its radially intermediate portion, which is restrained on the cover 152, until it achieves the deformed configuration shown in broken outline in Figure 1. In this condition, the clutch pressure plate 154, which is no longer subject to the axial pressure of the spring 155, moves away from the plate 148 by virtue of the action of the tangential tabs, thus interrupting the transmission of torque between the driving portion and the driven portion of the clutch 113.

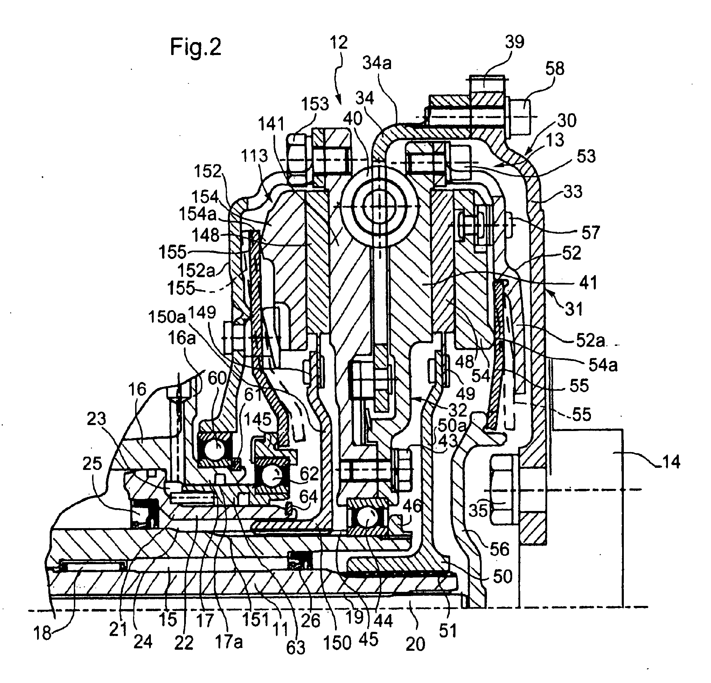

A second embodiment according to the present invention of a motor-vehicle transmission provided with a gearbox with two coaxial input shafts and two clutches is shown in Figure 2 in which parts and elements identical or corresponding to those of Figure 1 have been given the same reference numerals.

As is clear from a comparison between Figures 1 and 2, this second embodiment is substantially identical to that described above, with the difference that the first and second elements 33 and 34 of the first mass 31 of the flywheel 30 are connected for rotation with one another by means of screws 58 instead of by meshing between respective ring gears 36 and 38.

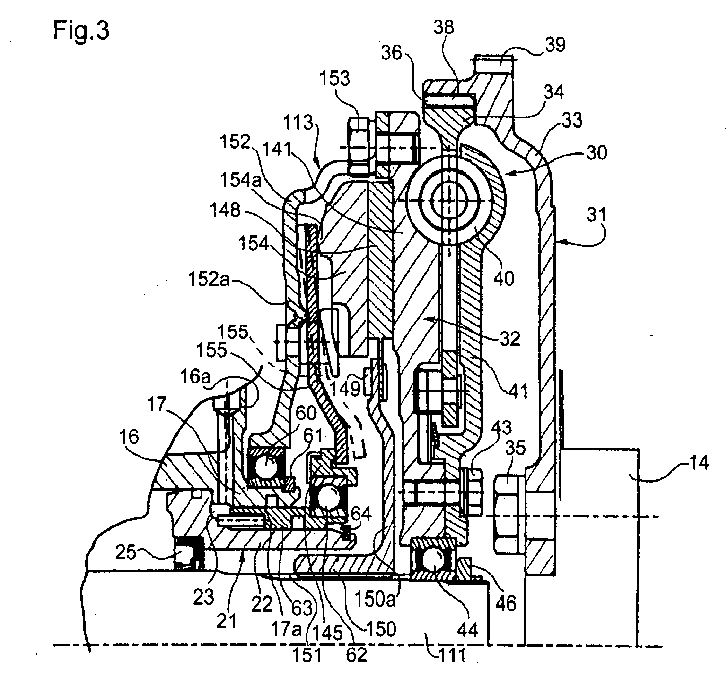

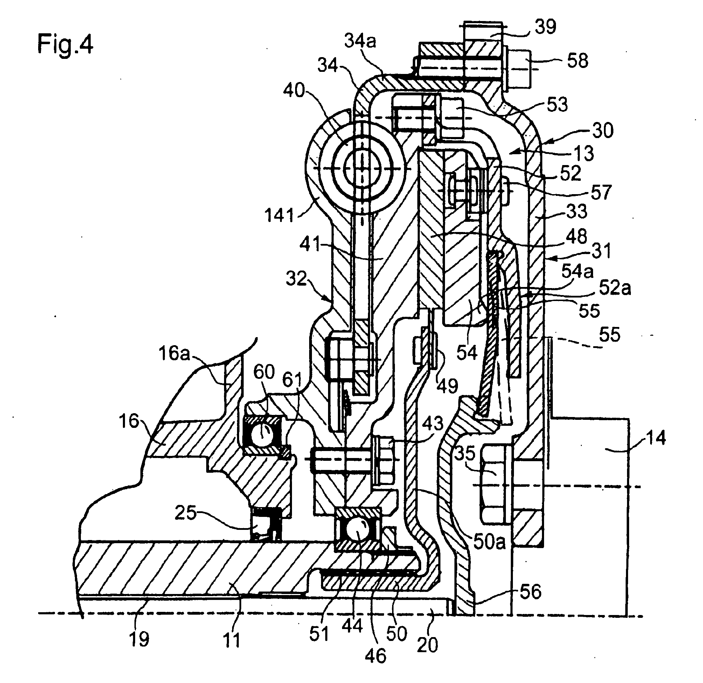

Figures 3 and 4 show two preferred embodiments according to the present invention of a motor-vehicle transmission provided with a gearbox having only one input shaft and only one clutch. These embodiments will not be described in further detail since they are clearly based on the two embodiments described above.

In particular, the embodiment shown in Figure 3 is derived from the part of the transmission of Figure 1 that comprises the clutch 113 associated with the outer gearbox input shaft 111. For this reason, all of the components forming part of the clutch of the transmission of Figure 3 are indicated by the same reference numerals as those used for the corresponding components of, the clutch 113 of the transmission of Figure 1. The same applies to the embodiment of Figure 4 which is based on the structure of the clutch 13 of the transmission of Figure 2.

In comparison with the third embodiment, the fourth embodiment has the advantage of being more compact axially by virtue of the sliding-rod clutch-actuating mechanism.

## Claims

1. A motor-vehicle transmission comprising:
a gearbox having at least one input shaft (11, 111; 111; 11) and a support housing (16),
a coupling unit (12) interposed between the gearbox and a crankshaft (14) of the motor-vehicle and having at least one dry clutch (13, 113; 113; 13) operable to connect the crankshaft (14) for rotation with the at least one input shaft (11, 111; 111; 11), wherein the at least one dry clutch (13, 113; 113; 13) includes a driven portion (48, 50, 148, 150; 148, 150; 48, 50) connected for rotation with the at least one input shaft (11, 111; 111; 11) and a driving portion (41, 52, 54, 141, 152, 154; 141, 152, 154; 41, 52, 54) connected for rotation with the crankshaft (14), and
rotation support means (44, 60) for supporting the driving portion (41, 52, 54, 141, 152, 154; 141, 152, 154; 41, 52, 54) of the at least one dry clutch (13, 113; 113; 13) for rotation,
wherein said rotation support means (44,60) include a first bearing (44) having an inner race mounted on the at least one input shaft (111; 111; 11),
**characterized in that** the inner race of the first bearing (44) is in axial abutment on one side and is clamped axially on the opposite side, whereby clutch-actuating forces are not discharged onto the crankshaft (14), and **in that** said rotation support means (44,60) further include a second bearing (60) mounted on the support housing (16).

2. A transmission according to Claim 1, wherein the first bearing (44) is a radial ball bearing.

3. A transmission according to Claim 1 or Claim 2, wherein the gearbox has two coaxial input shafts (11, 111), namely an inner shaft (11) and an outer hollow shaft (111), wherein the coupling unit (12) has first and second dry clutches (13, 113) operable to connect the crankshaft (14) for rotation with the inner input shaft (11) and the outer input shaft (111), respectively, and wherein the first bearing (44) is arranged between the driving portions (41, 52, 54, 141, 152, 154) of the two clutches (13, 113) and the outer input shaft (111) and is configured to support said driving portions for rotation about said input shaft.

4. A transmission according to Claim 3, wherein the driving portions (41, 52, 54, 141, 152, 154) of the first and second dry clutches (13, 113) comprise each a respective abutment member (41, 141) intended to be connected for rotation with the crankshaft (14), wherein the driven portions (48, 50, 148, 150) of the first and second dry clutches (13, 113) comprise each a respective friction plate (48, 148) which is connected for rotation with a respective input shaft (11, 111) and is configured to be clamped against the respective abutment member (41, 141), and wherein both the abutment members (41, 141) are supported for rotation by the first bearing (44).

5. A transmission according to Claim 4, wherein the first and second clutches (13, 113) further comprise each a respective resilient element (55, 155) configured to keep the associated clutch (13, 113) in a normally engaged or disengaged condition and a cover member (52, 152) coupled for rotation with the respective abutment member (41, 141) and arranged to provide a restraint for the respective resilient element (55, 155).

6. A transmission according to Claim 5, wherein the cover member (152) of the second clutch (113) is supported for rotation by the second bearing (60).

7. A transmission according to any of Claims 3 to 6, further comprising an actuating rod (20) which is slidably arranged in a coaxial cavity (19) provided in the inner input shaft (11) and is operable to actuate the first clutch (13).

8. A transmission according to any of Claims 3 to 7, further comprising an annular plunger (63) which is arranged around the outer input shaft (111) so as to be axially slidable thereon and is operable to actuate the second clutch (113).

9. A transmission according to any of Claims 3 to 8, further comprising a two-mass flywheel (30) intended to be interposed between the coupling unit (12) and the crankshaft (14), wherein the two-mass flywheel (30) comprises a first engine-side mass (31) and a second gearbox-side mass (32), and wherein the abutment members (41, 141) of the first and second clutches (13, 113) form at least part of the second mass (32).

10. A transmission according to any of Claims 3 to 9, wherein the first and second clutches (13, 113) are normally-engaged.

11. A transmission according to Claim 1 or Claim 2, wherein the gearbox has one input shaft (111; 11), wherein the coupling unit (12) has one dry clutch (113; 13) operable to connect the crankshaft (14) for rotation with the input shaft (111; 11), and wherein the first bearing (44) is arranged between the driving portion (141, 152, 154; 41, 52, 54) of the clutch (113, 13) and the input shaft (111; 11) and is configured to support said driving portion for rotation about said input shaft.

12. A transmission according to Claim 11, wherein the driving portion (141, 152, 154; 41, 52, 54) of the clutch (113; 13) comprises an abutment member (141; 41) intended to be connected for rotation with the crankshaft (14), wherein the driven portion (148, 150; 48, 50) of the clutch (113; 13) comprises a friction plate (148; 48) which is connected for rotation with the input shaft (111; 11) and is configured to be clamped against the abutment member (141; 41), and wherein the abutment member (141; 41) is supported for rotation by the first bearing (44).

13. A transmission according to Claim 12, wherein the clutch (113; 13) further comprises a resilient element (155; 55) configured to keep the clutch (113; 13) in a normally engaged or disengaged condition and a cover member (152; 52) coupled for rotation with the abutment member (141; 41) and arranged to provide a restraint for the resilient element (155; 55).

14. A transmission according to Claim 13, wherein the cover member (152) of the clutch (113) is supported for rotation by the second bearing (60).

15. A transmission according to any of Claims 11 to 13, further comprising an actuating rod (20) which is slidably arranged in a coaxial cavity (19) provided in the input shaft (11) and is operable to actuate the clutch (13).

16. A transmission according to any of Claims 11 to 14, further comprising an annular plunger (63) which is arranged around the input shaft (111) so as to be axially slidable thereon and is operable to actuate the clutch (113).

17. A transmission according to any of Claims 12 to 16, further comprising a two-mass flywheel (30) intended to be interposed between the coupling unit (12) and the crankshaft (14), wherein the two-mass flywheel (30) comprises a first engine-side mass (31) and a second gearbox-side mass (32), and wherein the abutment member (141; 41) of the clutch (113; 13) forms at least part of the second mass (32).

18. A transmission according to Claim 9 or Claim 17, wherein the first mass (31) of the flywheel (30) comprises a first element (33) intended to be fixed directly to the crankshaft (14) and a second element (34) connected for rotation with the second mass (32) by means of a torsional damper (40), and wherein said first and second elements (33, 34) are torsionally coupled to one another by means of a toothed connection (36, 38).

## Patentansprüche

1. Kraftfahrzeuggetriebe, enthaltend
ein Getriebegehäuse mit wenigstens einer Eingangswelle (11, 111; 111; 11) und einem Lagergehäuse (16)
eine Kupplungseinheit (12), die zwischen dem Getriebegehäuse und einer Kurbelwelle (14) des Kraftfahrzeugs angeordnet ist und wenigstens eine Trockenkupplung (13, 113; 113; 13) enthält, die in Funktion die Kurbelwelle (14) zur Drehung mit der wenigstens einen Eingangswelle (11, 111; 111; 11) verbindet, wobei die wenigstens eine Trockenkupplung (13; 113; 113; 13) einen angetriebenen Abschnitt (48, 50, 148, 150; 148, 150; 48, 50), der zur Drehung mit der wenigstens einen Eingangswelle (11, 111; 111; 11) verbunden ist, und einen antreibenden Abschnitt (41, 52, 54, 141, 152, 154; 141, 152, 154; 41, 52, 54) enthält, der zur Drehung mit der Kurbelwelle (14) verbunden ist, und
eine Drehtagereinrichtung (44, 60), die den antreibenden Abschnitt (41, 52, 54, 141, 152, 154; 141, 152, 154; 41, 52, 54) der wenigstens einen Trockenkupplung (13, 113; 113; 13) zur Drehung lagert,
wobei die Drehlagereinrichtung (44, 60) ein erstes Lager (44) enthält, das einen inneren Laufring hat, der an der wenigstens einen Eingangswelle (111; 111; 11) angebracht ist,
**dadurch gekennzeichnet, dass** der innere Laufring des ersten Lagers (44) auf der einen Seite axial anliegt und auf der gegenüberliegenden Seite axial festgeklemmt ist, wodurch Kupplungsbetätigungskräfte nicht auf die Kurbelwelle (14) abgeleitet werden, und dass die Drehlagereinrichtung (44, 60) weiterhin ein zweites Lager (60) enthält, das an dem Lagergehäuse (16) angebracht ist.

2. Getriebe nach Anspruch 1, bei dem das erste Lager (44) ein Radialkugellager ist.

3. Getriebe nach Anspruch 1 oder Anspruch 2, bei dem das Getriebegehäuse zwei koaxiale Eingangswellen (11, 111), d.h. eine innere Welle (11) und eine äußere, hohle Welle (111) hat, wobei die Kupplungseinheit (12) eine erste und eine zweite Trockenkupplung (13, 113) hat, die in Funktion die Kurbelwelle (14) zur Drehung mit der inneren Eingangswelle (11) bzw. der äußeren Eingangswelle (111) verbinden, und das erste Lager (44) zwischen den antreibenden Abschnitten (41, 52, 54, 141, 152, 154) der beiden Kupplungen (13, 113) und der äußeren Eingangswelle (111) angeordnet und dazu eingerichtet ist, die antreibenden Abschnitte zur Drehung um die Eingangswelle zu lagern.

4. Getriebe nach Anspruch 3, bei dem die antreibenden Abschnitte (41, 52, 54, 141, 152, 154) der ersten und der zweiten Trockenkupplungen (13, 113) jeweils ein entsprechendes Anliegelement (41, 141) enthalten, das dazu bestimmt ist, zur Drehung mit der Kurbelwelle (14) verbunden zu sein, wobei die angetriebenen Abschnitte (48, 50, 148, 150) der ersten und der zweiten Trockenkupplung (13, 113) jeweils eine entsprechende Reibplatte (48, 148) enthalten, die zur Drehung mit einer entsprechenden Eingangswelle (11, 111) verbunden und dazu eingerichtet ist, gegen das entsprechende Anliegelement (41, 141) geklemmt zu werden, und beide Anliegelemente (41, 141) zur Drehung durch das erste Lager (44) gelagert sind.

5. Getriebe nach Anspruch 4, bei dem die erste und die zweite Kupplung (13, 113) weiterhin jeweils ein entsprechendes federndes Element (55, 155), das so konfiguriert ist, dass es die zugehörige Kupplung (13, 113) in einem normalerweise in Eingriff oder nicht in Eingriff befindlichen Zustand hält, sowie ein Abdeckungselement (52, 152) umfassen, das zur Drehung mit dem entsprechenden Anliegelement (41, 141) gekoppelt und so eingerichtet ist, dass es einen Rückhalt für das entsprechende federnde Element (55, 155) darstellt.

6. Getriebe nach Anspruch 5, bei dem das Abdeckungselement (152) der zweiten Kupplung (113) zur Drehung durch das zweite Lager (60) gelagert ist.

7. Getriebe nach einem der Ansprüche 3 bis 6, das weiterhin eine Auslösestange (20) umfasst, die verschiebbar in einem koaxialen Hohlraum (19) angeordnet ist, der in der inneren Eingangswelle (11) vorhanden ist, und die betätigt werden kann, um die erste Kupplung (13) auszulösen

8. Getriebe nach einem der Ansprüche 3 bis 7, das weiterhin einen ringförmigen Kolben (63) umfasst, der die äußere Eingangswelle (111) umgebend derart angeordnet ist, dass er auf dieser verschiebbar ist, und betätigt werden kann, um die zweite Kupplung (113) auszulösen.

9. Getriebe nach einem der Ansprüche 3 bis 8, weiterhin enthaltend ein Zweimassen-Schwungrad (30), das dazu bestimmt ist, zwischen der Kupplungseinheit (12) und der Kurbelwelle (14) angeordnet zu sein, wobei das Zweimassen-Schwungrad (30) eine erste, maschinenseitige Masse (31) und eine zweite getriebegehäuseseitige Masse (32) enthält und die Anliegelemente (41, 141) der ersten und der zweiten Kupplung (13, 113) wenigstens einen Teil der zweiten Masse (32) bilden.

10. Getriebe nach einem der Ansprüche 3 bis 9, bei dem die erste und die zweite Kupplung (13, 113) normalerweise in Eingriff stehen.

11. Getriebe nach Anspruch 1 oder 2, bei dem das Getriebegehäuse eine Eingangswelle (111; 11) hat, die Kupplungseinheit (12) eine Trockenkupplung (113; 13) hat, die in Funktion die Kurbelwelle (14) zur Drehung mit der Eingangswelle (111; 11) verbindet, und das erste Lager (44) zwischen dem antreibenden Abschnitt (141, 152, 154; 41, 52, 54) der Kupplung (113, 13) und der Eingangswelle (111; 11) angeordnet und dazu eingerichtet ist, den antreibenden Abschnitt zur Drehung um die Eingangswelle zu lagern.

12. Getriebe nach Anspruch 11, bei dem der antreibende Abschnitt (141, 152, 154; 41, 52, 54) der Kupplung (113; 13) ein Anliegelement (141; 41) enthält, das dazu bestimmt ist, zur Drehung mit der Kurbelwelle (14) verbunden zu sein, wobei der angetriebene Abschnitt (148, 150; 48, 50) der Kupplung (113; 13) eine Reibplatte (148; 48) enthält, die zur Drehung mit der Eingangswelle (111; 11) verbunden und dazu eingerichtet ist, gegen das Anliegelement (141, 41) geklemmt zu werden, und das Anliegelement (141; 41) zur Drehung durch das erste Lager (44) gelagert ist.

13. Getriebe nach Anspruch 12, bei dem die Kupplung (113; 13) weiterhin ein federndes Element (155; 55), das dazu eingerichtet ist, die Kupplung (113; 13) in einem normalerweise in Eingriff oder nicht in Eingriff befindlichem Zustand zu halten, und ein Abdeckelement (152; 52) enthält, das zur Drehung mit dem Anliegelement (141; 41) gekoppelt und so eingereichtet ist, dass es einen Rückhalt für das federnde Element (155; 55) darstellt.

14. Getriebe nach Anspruch 13, bei dem das Abdeckelement (152) der Kupplung (113) zur Drehung durch das zweite Lager (60) gelagert ist.

15. Getriebe nach einem der Ansprüche 11 bis 13, weiterhin enthaltend eine Auslösestange (20), die verschiebbar in einem koaxialen Hohlraum (19) angeordnet ist, der in der inneren Eingangswelle (11) vorhanden ist, und die betätigt werden kann, um die Kupplung (13) auszulösen

16. Getriebe nach einem der Ansprüche 11 bis 14, weiterhin enthaltend einen ringförmigen Kolben (63), der die Eingangswelle (111) umgebend derart angeordnet ist, dass er auf dieser verschiebbar ist, und betätigt werden kann, um die Kupplung (113) auszulösen.

17. Getriebe nach einem der Ansprüche 12 bis 16, weiterhin enthaltend ein Zweimassen-Schwungrad (30), das dazu bestimmt ist, zwischen der Kupplungseinheit (12) und der Kurbelwelle (14) angeordnet zu sein, wobei das Zweimassen-Schwungrad (30) eine erste, nmaschinenseitige Masse (31) und eine zweite getriebegehäuseseitige Masse (32) enthält und das Anliegelement (41, 141) der Kupplung (13, 113) wenigstens einen Teil der zweiten Masse (32) bildet.

18. Getriebe nach Anspruch 9 oder 17, bei dem die erste Masse (31) des Schwungrades (30) ein erstes Element (33), das dazu bestimmt ist, direkt an der Kurbelwelle (14) befestigt zu sein, und ein zweites Element (34) enthält, das zur Drehung mit der zweiten Masse (32) mittels eines Torsionsdämpfers (40) verbunden ist, wobei das erste und das zweite Element (33, 34) mit Hilfe einer Zahnverbindung (36, 38) torsionsmäßig gekoppelt sind.

## Revendications

1. Transmission de véhicule à moteur comportant :
une boîte de vitesses ayant au moins un arbre d'entrée (11, 111 ; 111 ; 11) et un carter de support (16) ;
une unité d'accouplement (12) interposée entre la boîte de vitesses et un vilebrequin (14) du véhicule à moteur et ayant au moins un embrayage à sec (13, 113 ; 113 ; 13) pouvant fonctionner afin de relier le vilebrequin (14) pour rotation au au moins un arbre d'entrée (11, 111 ; 111 ; 11), le au moins un embrayage à sec (13, 113 ; 113 ; 13) comprenant une partie entraînée (48, 50, 148, 150 ; 148, 150 ; 48, 50) reliée pour rotation au au moins un arbre d'entrée (11, 111 ; 111 ; 11) et une partie d'entraînement (41, 52, 54, 141, 152, 154 ; 141, 152, 154 ; 41, 52, 54) reliée pour rotation au vilebrequin (14), et
des moyens de support de rotation (44, 60) destinés à supporter la partie d'entraînement (41, 52, 54, 141, 152, 154 ; 141, 152, 154 ; 41, 52, 54) du au moins un embrayage à sec (13, 113 ; 113 ; 13) pour rotation,
lesdits moyens de support de rotation (44, 60) comprenant un premier palier (44) ayant une piste intérieure montée sur le au moins un arbre d'entrée (111 ; 111 ; 11),
**caractérisée en ce que** la piste intérieure du premier roulement (44) est en butée axiale sur un premier côté et est serrée axialement sur le côté opposé, de sorte que des forces d'actionnement d'embrayage ne sont pas déchargées sur le vilebrequin (14), et **en ce que** lesdits moyens de support de rotation (44, 60) comprennent en outre un deuxième palier (60) monté sur le carter de support (16).

2. Transmission selon la revendication 1, dans laquelle le premier palier (44) est un roulement à billes radial.

3. Transmission selon la revendication 1 ou la revendication 2, dans laquelle la boîte de vitesses a deux arbres d'entrée coaxiaux (11, 111), c'est-à-dire un arbre intérieur (11) et un arbre creux extérieur (111), l'unité d'accouplement (12) ayant des premier et deuxième embrayages à sec (13, 113) pouvant fonctionner afin de relier le vilebrequin (14) pour rotation à l'arbre d'entrée intérieur (11) et l'arbre d'entrée extérieur (111), respectivement, et le premier palier (44) étant disposé entre les parties d'entraînement (41, 52, 54, 141, 152, 154) des deux embrayages (13, 113) et l'arbre d'entrée extérieur (111) et étant configuré pour supporter lesdites parties d'entraînement pour rotation autour dudit arbre d'entrée.

4. Transmission selon la revendication 3, dans laquelle les parties d'entraînement (41, 52, 54, 141, 152, 154) des premier et deuxième embrayages à sec (13, 113) comportent chacune un élément de butée respectif (41, 141) prévu pour être relié pour rotation au vilebrequin (14), les parties entraînées (48, 50, 148, 150) des premier et deuxième embrayages à sec (13, 113) comportant chacune un plateau de friction respectif (48, 148) qui est relié pour rotation à un arbre d'entrée respectif (11, 111) et est configuré pour être serré contre l'élément de butée respectif (41, 141), les éléments de butée (41, 141) étant tous les deux supportés pour rotation par le premier palier (44).

5. Transmission selon la revendication 4, dans laquelle les premier et deuxième embrayages (13, 113) comportent en outre chacun un élément élastique respectif (55, 155) configuré pour maintenir l'embrayage associé (13, 113) dans un état normalement engagé ou désengagé et un élément de couvercle (52, 152) relié pour rotation à l'élément de butée respectif (41, 141) et prévu pour procurer une retenue pour l'élément élastique respectif (55, 155).

6. Transmission selon la revendication 5, dans laquelle l'élément de couvercle (152) du deuxième embrayage (113) est supporté pour rotation par le deuxième palier (60).

7. Transmission selon l'une quelconque des revendications 3 à 6, comportant en outre une tige d'actionnement (20) qui est disposée de façon coulissante dans une cavité coaxiale (19) prévue dans l'arbre d'entrée intérieur (11) et peut fonctionner afin d'actionner le premier embrayage (13).

8. Transmission selon l'une quelconque des revendications 3 à 7, comportant en outre un plongeur annulaire (63) qui est disposé autour de l'arbre d'entrée extérieur (111) de façon à être axialement coulissant dessus et peut fonctionner afin d'actionner le deuxième embrayage (113).

9. Transmission selon l'une quelconque des revendications 3 à 8, comportant en outre un volant d'inertie à deux masses (30) prévu pour être interposé entre l'unité d'accouplement (12) et le vilebrequin (14), le volant d'inertie à deux masses (30) comportant une première masse du côté moteur (31) et une deuxième masse du côté boîte de vitesses (32), et les éléments de butée (41, 141) des premier et deuxième embrayages (13, 113) formant au moins une partie de la deuxième masse (32).

10. Transmission selon l'une quelconque des revendications 3 à 9, dans laquelle les premier et deuxième embrayages (13, 113) sont normalement engagés.

11. Transmission selon la revendication 1 ou la revendication 2, dans laquelle la boîte de vitesses a un arbre d'entrée (111 ; 11), l'unité d'accouplement (12) ayant un embrayage à sec (113 ; 13) pouvant fonctionner afin de relier le vilebrequin (14) pour rotation à l'arbre d'entrée (111 ; 11), et le premier palier (44) étant disposé entre la partie d'entraînement (141, 152, 154 ; 41, 52, 54) de l'embrayage (113, 13) et l'arbre d'entrée (111 ; 11) et étant configuré pour supporter ladite partie d'entraînement pour rotation autour dudit arbre d'entrée.

12. Transmission selon la revendication 11, dans laquelle la partie d'entraînement (141, 152, 154 ; 41, 52, 54) de l'embrayage (113 ; 13) comporte un élément de butée (141 ; 41) prévu pour être relié pour rotation au vilebrequin (14), la partie entraînée (148, 150 ; 48, 50) de l'embrayage (113 ; 13) comportant chacune un plateau de friction respectif (148 ; 48) qui est relié pour rotation à l'arbre d'entrée (111 ; 11) et est configuré pour être serré contre l'élément de butée (141 ; 41), et l'élément de butée (141 ; 41) étant supporté pour rotation par le premier palier (44).

13. Transmission selon la revendication 12, dans laquelle l'embrayage (113 ; 13) comporte en outre un élément élastique (155 ; 55) configuré pour maintenir l'embrayage (113 ; 13) dans un état normalement engagé ou désengagé et un élément de couvercle (152 ; 52) relié pour rotation à l'élément de butée (141 ; 41) et prévu pour procurer une retenue pour l'élément élastique (155 ; 55).

14. Transmission selon la revendication 13, dans laquelle l'élément de couvercle (152) de l'embrayage (113) est supporté pour rotation par le deuxième palier (60).

15. Transmission selon l'une quelconque des revendications 11 à 13, comportant en outre une tige d'actionnement (20) qui est disposée de façon coulissante dans une cavité coaxiale (19) prévue dans l'arbre d'entrée intérieur (11) et peut fonctionner afin d'actionner l'embrayage (13).

16. Transmission selon l'une quelconque des revendications 11 à 14, comportant en outre un plongeur annulaire (63) qui est disposé autour de l'arbre d'entrée (111) de façon à être axialement coulissant dessus et peut fonctionner afin d'actionner l'embrayage (113).

17. Transmission selon l'une quelconque des revendications 12 à 16, comportant en outre un volant d'inertie à deux masses (30) prévu pour être interposé entre l'unité d'accouplement (12) et le vilebrequin (14), le volant d'inertie à deux masses (30) comportant une première masse du côté moteur (31) et une deuxième masse du côté boîte de vitesses (32), et l'élément de butée (141 ; 41) de l'embrayage (113 ; 13) formant au moins une partie de la deuxième masse (32).

18. Transmission selon la revendication 9 ou la revendication 17, dans laquelle la première masse (31) du volant d'inertie (30) comporte un premier élément (33) prévu pour être fixé directement sur le vilebrequin (14) et un deuxième élément (34) relié pour rotation à la deuxième masse (32) au moyen d'un amortisseur de torsion (40), et lesdits premier et deuxième éléments (33, 34) étant reliés en torsion l'un à l'autre au moyen d'un raccordement denté (36, 38).
